# EUROPÄISCHE PATENTSCHRIFT

(11) **EP 0 623 298 B1**
(45) Veröffentlichungstag und Bekanntmachung des Hinweises auf die Patenterteilung: **08.01.1997**
(21) Anmeldenummer: 94104928.0
(22) Anmeldetag: 29.03.1994
(51) Int. Cl.: A46D 3/06, A46D 3/00

(54) **Verfahren und Vorrichtung zur Herstellung von Bürstenwaren**
Method and device for manufacturing a tooth brush
Procédé et dispositif de fabrication de brosses à dents

(30) Priorität: 06.04.1993 DE 4311186
(43) Veröffentlichungstag der Anmeldung: 09.11.1994
(73) Patentinhaber: M + C SCHIFFER GmbH, D-53577 Neustadt (DE)
(72) Erfinder: Meyer, Berthold, D-53577 Neustadt (DE)
(74) Vertreter: Kossobutzki, Walter, Dipl.-Ing.(FH)

(56) Entgegenhaltungen:
- EP-A- 0 197 384
- EP-A- 0 405 204
- DE-C- 845 933
- FR-A- 682 842

## Beschreibung

Die Erfindung bezieht sich auf ein Verfahren zur Herstellung von Bürsten, insbesondere Zahnbürsten, bei dem zunächst ein Bürstenkörper aus thermoplastischem Kunststoff gespritzt wird, der im Bereich des zu bildenden Bürstenkopfes eine vorgegebene Anzahl und Anordnung von durchgehenden Bürstenlöchern sowie eine rückseitige, sich zumindest über alle Bürstenlöcher erstreckende Aussparung aufweist, bei dem anschließend vorbereitete Borstenbündel in alle Bündellöcher eingesteckt werden und bei dem schließlich die zuvor gebildete Aussparung mit weiterem Kunststoff ausgespritzt wird.

Bei der Herstellung von Zahnbürsten ist es bekannt, zunächst den Borstenkopf mit einem sich über einen Hals daran anschließenden Griff aus Kunststoff in einer entsprechend ausgebildeten Form durch einen Spritzvorgang herzustellen und anschließend die Beborstungsfläche mit Borstenbündeln zu bestücken. Für das Bestücken der Beborstungsfläche bzw. des Bürstenkopfes mit Borstenbündel ist es bekannt, beim Spritzvorgang des Bürstenkopfes in denselben als Sacklöcher ausgebildete Bündellöcher einzuformen. In diese Bündellöcher werden dann vorbereitete Borstenbündel eingesteckt. Dabei sind die Bündellöcher in einer Anzahl und einer Anordnung vorgesehen, die der Anzahl und der Anordnung der Borstenbündel entsprechen. Um die Borstenbündel in den Bündellöchern zu sichern, werden die einzelnen Borstenbündel mittels einer geeigneten Vorrichtung aus einem Borstenpaket vereinzelt, gefaltet und anschließend in die Bündellöcher gestopft. Die Faltung erfolgt über einen Anker, der aus einem geeigneten Metall besteht. Dabei ist die Breite des Ankers geringfügig größer als der Querschnitt eines Borstenbündels. Dies hat zur Folge, daß die über das Borstenbündel hinausragenden Enden des Ankers radial von den Bündellöchern in den Werkstoff des Bürstenkörpers eingepreßt werden. Dabei entstehen in der Beborstungsfläche verhältnismäßig kleine Schlitze, die sich nicht störend auswirken, da sie mit dem Auge kaum erkennbar sind. Diese metallischen Anker wirken sich jedoch auf die Recyclingfähigkeit der Zahnbürste nachteilig aus. Durch diese Metallanker kann nämlich der Bürstenkopf nicht in wirtschaftlicher Weise für eine Wiederverwertung aufbereitet werden. Bei einer beabsichtigten Wiederverwertung des Werkstoffes einer Zahnbürste wird deshalb der Bürstenkopf mit den Borsten vom Bürstenhals abgetrennt und nur der Griff mit dem Bürstenhals zerkleinert und nur der Kunststoff dieser Bürstenteile wiederverwertet. Der Bürstenkopf mit Borstenbündeln wird einer Deponie zugeführt.

In der US-PS 3 604 043 ist ein Verfahren zur Herstellung von Bürsten beschrieben und dargestellt, beim dem aus einem Schnittborstenbehälter Borstenbündel entnommen werden, die dann an ihren befestigungsseitigen Enden verschweißt werden, wobei diese Enden eine besondere Form erhalten. Anschließend werden die so vorbereiteten Borstenbündel in Sacklöcher, die an ihrem inneren Ende eine Erweiterung besitzen, eines Bürstenkörpers gedrückt. Dabei verformt sich das befestigungsseitige Ende der Borstenbündel so, daß dieselben einen sicheren Halt im Bürstenkörper erhalten. Ein solches Verfahren ist jedoch verhältnismäßig aufwendig; die Herstellung der Erweiterungen der Sacklöcher ist schwierig durchzuführen.

Andererseits ist es bekannt, Zahnbürsten derart herzustellen, daß zunächst auf eine vorgegebene Länge zugeschnittene Borstenbündel in entsprechende Kanäle eines metallischen, plattenartigen Trägers eingesteckt und an der Rückseite des plattenartigen Trägers und damit an ihren befestigungsseitigen Enden zu einer Verdickung aufgeschmolzen werden. Anschließend wird der mit den Borstenbündeln vorbereitete Träger in einer besonderen Vorrichtung gegen die zuvor aufgeschmolzene Beborstungsfläche des vorgefertigten, aus Bürstenträger, Hals und Griff bestehenden Körpers der Zahnbürste bewegt. Durch den Träger werden nun die Verdickungen der befestigungsseitigen Enden der Borstenbündel in die aufgeschmolzene Beborstungsfläche eingedrückt. Nach dem Abkühlen der aufgeschmolzenen Beborstungsfläche sind die Borstenbündel im Borstenträger bzw. im Bürstenkopf befestigt. Eine nach diesem Verfahren hergestellte Zahnbürste ist komplett recyclingfähig. Ein Nachteil dieses Verfahrens wird darin gesehen, daß beim Eindrücken der Verdikkungen der befestigungsseitigen Enden der Borstenbündel in die aufgeschmolzene Beborstungsfläche Materialanhäufungen um die Borstenbündel entstehen, die den optischen Eindruck einer solchen Zahnbürste beeinträchtigen.

Ein ähnliches Verfahren ist bereits in der DE-PS 845 933 offenbart. Hier ist jedoch der Träger, der die zugeschnittenen Borstenbündel aufnimmt, als Formhälfte ausgebildet, die nach der Bestückung mit den Borstenbündeln und der Herstellung der Verdickungen an den befestigungsseitigen Borstenende zusammen mit einer weiteren Formhälfte eine Spritzgießform bildet, in der dann der Griff der Zahnbürste hergestellt und dabei gleichzeitig mit den Borstenbündeln verbunden wird. Bei diesem Verfahren ist die die Bündellöcher aufweisende Formhälfte während der Beborstung für den Spritzvorgang nicht nutzbar und umgekehrt.

In einer älteren Patentanmeldung wurde bereits vorgeschlagen, bei der Herstellung von Zahnbürsten mit einem Bürstenkörper aus thermoplastischem Kunststoff in einem ersten Spritzvorgang einen die Bürstenbündellöcher als Durchgangslöcher aufweisenden, ersten Bürstenteilkörper herzustellen. In diesen Bürstenteilkörper werden anschließend - in der Spritzgußform - die Borstenbündel in die Borstenbündellöcher eingesetzt und an ihrem dem Nutzungsende abgewandten bzw. inneren Ende verschmolzen und dabei dicht mit dem ersten Bürstenteilkörper verbunden. Sodann wird ein zweiter Bürstenteilkörper in einem zweiten Spritzvorgang hergestellt, wobei der erste Bürstenteilkörper mit dem zweiten, die inneren Enden der Borstenbündel überdeckenden Bürstenteilkörper umspritzt wird. Bei diesem Verfahren wird es als nachteilig angesehen, daß sich durch das Beborsten der Bürstenkörper in der Spritzgußform die Zykluszeiten zwangsläufig erhöhen. Wenn zusätzlich noch eine Konfigurierung der Borstenbündel erfolgen soll, erhöhen sich die Zykluszeiten weiter. Ein Abrunden der Borstenenden, beispielsweise durch einen Schleifvorgang, ist bei diesem Verfahren grundsätzlich ausgeschlossen, da sich feiner Schleifstaub in der Spritzgußform festsetzen würde und die Qualität der Zahnbürste erheblich beeinträchtigt.

Der Erfindung liegt deshalb die Aufgabe zugrunde, ein Verfahren zur Herstellung von Bürsten, insbesondere von Zahnbürsten, aufzuzeigen, welches die Herstellung recyclingfähiger Bürsten bei äußerst kurzen Zykluszeiten ermöglicht. Dabei soll der Einsatz sowohl von gefalteten Borstenbündeln als auch von Spulenborsten oder Borstenzuschnitten möglich sein.

Zur Lösung dieser Aufgabe wird gemäß der Erfindung bei einem Verfahren der eingangs beschriebenen Gattung vorgeschlagen, daß der vorgefertigte und mit Bündellöchern sowie mit einer rückseitigen Aussparung versehene Bürstenkörper von der Spritzgußform einer getrennten Beborstungsstation zugeführt wird, in der die vorbereiteten Borstenbündel eingesetzt und an ihren inneren Enden verschmolzenen werden, und daß der beborstete Bürstenkörper anschließend in eine weitere Spritzgußform zum Ausspritzen der Aussparung bewegt wird.

Durch ein solches Verfahren wird erreicht, daß bei verhältnismäßig kurzen Zykluszeiten recyclingfähige Zahnbürsten hergestellt werden können. Dabei können auch unter Verwendung der bisherigen Beborstungsmaschinen gefaltete Borstenbündel ohne metallische Anker in den Bürstenkörper bzw. Bürstenkopf eingesetzt werden. Lediglich die bisher zur Herstellung des Bürstenkörpers erforderlichen Formen müssen geringfügig abgeändert werden. Andererseits können aber auch normale Borstenbündel in den mit Bündellöchern versehenen Bürstenkörpern eingesteckt werden. Die eingesteckten Borstenbündel können, gegebenenfalls ohne die Verwendung einer zusätzlichen metallischen Trägerplatte, direkt im Bürstenkörper an ihren nutzungsseitigen Enden konfiguriert werden, bevor dann oder danach dann an den befestigungsseitigen Enden der Borstenbündel durch Aufschmelzung eine Verdickung erzeugt wird. Für beide Arten von Borstenbündel können somit gleiche Befestigungsvorrichtungen verwendet werden. Zusätzlich ist es möglich, die bereits in den Bürstenkörper eingesetzten Borstenbündel an den nutzungsseitigen Enden vor dem Einsetzen der einzelnen Borsten abzurunden bzw. anzuschleifen, ohne daß hier die Gefahr besteht, daß der damit verbundene Staub in die Spritzgußform gelangt.

Weitere Merkmale eines Verfahrens gemäß der Erfindung sind in den Ansprüchen 2 - 11 offenbart.

Die Erfindung wird nachfolgend anhand eines in einer Zeichnung in stark vereinfachter Weise dargestellten Ausführungsbeispieles näher erläutert. Dabei zeigen
- Fig. 1: einen Schnitt durch eine Form zur Herstellung eines Bürstenkörpers,
- Fig. 2: einen Schnitt durch einen mit Borstenbündeln bestückten Bürstenkörper und
- Fig. 3: einen Schnitt durch eine weitere Form zur Fertigstellung des Bürstenkörpers.

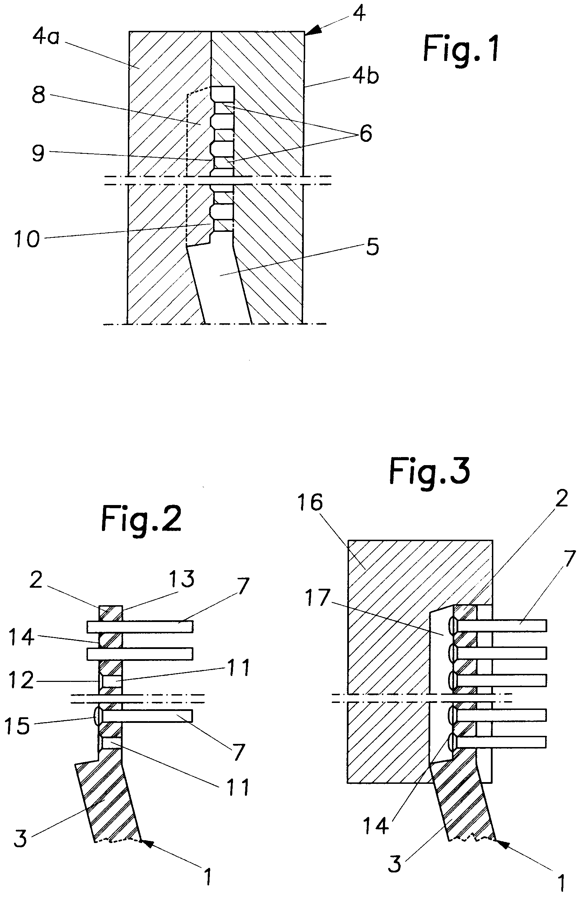

Der gemäß dem Ausführungsbeispiel herzustellende Bürstenkörper 1 ist eine Zahnbürste, die in an sich bekannter Weise aus einem Bürstenkopf 2, einem Bürstenhals 3 und einem sich an den Bürstenhals 3 anschließenden, jedoch der Einfachheit halber nicht dargestellten Handgriff besteht. Der Bürstenkörper 1 wird in einer aus zwei Teilen 4a und 4b bestehenden Form 4 durch einen Spritzvorgang aus einem geeigneten Kunststoff hergestellt. Dazu weist die in Fig. 1 geschlossen dargestellte Form 4 einen Formhohlraum 5 auf, der genau dem fertigen, tragenden Körper der Zahnbürste entspricht. In der Fig. 1 der Zeichnung ist jedoch der Einfachheit halber nur der Bereich des Formhohlraumes 5 gezeigt, der zur Bildung des Bürstenkopfes 2 und des Bürstenhalses 3 (Fig. 2) dient.

Im Bereich des Bürstenkopfes 2 besitzt das Formteil 4b der Form 4 mehrere Stifte 6, die genau der Anzahl und der Anordnung der einzusetzenden Borstenbündel 7 entsprechen. Dabei sind diese Stifte 6 in diesem Ausführungsbeispiel etwa so lang ausgebildet, daß sie die Wandstärke des Bürstenkopfes durchdringen, da im Bereich des Formhohlraumes 5 das Formeil 4a einen Vorsprung 8 aufweist, der sich bis zu den Stirnflächen 9 der Stifte 6 des Formteiles 4b erstreckt. Im dargestellten Ausführungsbeispiel ist die freie Stirnfläche dieses Vorsprunges 8 mit kegelstumpfartigen Höckern bzw. Erhöhungen 10 versehen, deren freie Stirnfläche genau dem Querschnitt der freien Stirnflächen der Stifte 6 entspricht. Der Vorsprung 8 ist in bezug auf seine Länge und seine Breite so groß ausgebildet, daß er sich zumindest über alle Stifte 6 erstreckt. Im dargestellten Ausführungsbeispiel entspricht die Breite des Vorsprunges 8 jedoch der Breite des fertigten Bürstenkopfes 2.

Durch Einspritzen eines geeigneten Kunststoffes in die Form 4 wird nun der Formhohlraum 5 ausgefüllt. Dabei entsteht ein Borstenträger, der aus einem Bürstenkopf 2 und einem Halsteil 3 besteht, wie sie in der Fig. 2 zu erkennen sind. Der Bürstenkopf 2 weist dabei zunächst nur einen Teil der endgültigen Wandstärke des fertigen Bürstenkopfes 2 auf, der durch den Vorsprung 8 im Formteil 4a vorgegeben ist. Durch die Stifte 6 sind in dem Bürstenkopf 2 durchgehende Bündellöcher 11 entstanden, die an der Rückseite des Bürstenkopfes 2 eine Fase 12 besitzen.

Selbstverständlich ist es auch hier möglich, die nutzungsseitigen Enden der einzelnen Borsten der Borstenbündeln durch einen Schleifvorgang oder dgl. abzurunden. Dabei erfolgt dieses Abrunden - wenn die Borstenbündeln konfiguriert werden - immer vor der Konfigurierung, d.h., also zu einem Zeitpunkt, zu dem sich noch alle nutzungsseitigen Borstenenden in einer Ebene befinden. Sowohl das Abrunden der nutzungsseitigen Borstenenden als auch das Konfigurieren der Borstenbündel und das Einsetzen der Borstenbündel 7 in die Bündellöcher 11 erfolgt gemäß der Fig. 2 in einer getrennten Beborstungsstation, die mit Abstand von der Form 4 der Fig. 1 angeordnet, so daß keinerlei Staub oder dgl. in die Form 4 gelangen kann.

In diese Bündellöcher 11 werden nun die vorbereiteten Borstenbündel 7 eingesteckt. Diese Borstenbündel 7 können beispielsweise durch Faltung entstanden sein, wobei die gefalteten Borstenbündel 7 von der sogenannten Beborstungs fläche 13 aus in die Bündellöcher 11 eingesteckt werden. Es ist jedoch auch möglich, solche Borstenbündel 7 zu verwenden, die von einem endlosen Borstenstrang oder von Borstensträngen in vorgegebener Länge abgeschnitten wurden. Derartige Borstenbündel werden jedoch in vorteilhafter Weise von der Rückenfläche 14 des Bürstenkopfes 2 eingesteckt. Solche Borstenbündel 7 können in an sich bekannter Weise konfiguriert werden. Dies kann in der Weise erfolgen, daß gegen die Beborstungsfläche 13 des Bürstenkopfes 2 eine Negativform zum Anliegen gebracht wird, die entsprezur Konfigurierung der einzelnen Borstenbündel 7 aufweist. Die Bündellöcher 11 weisen in vorteilhafter Weise kreisförmigen Querschnitt auf. Es ist jedoch auch möglich, jeden beliebigen Querschnitt zu verwenden, wobei auch unterschiedliche Querschnitte aufweisende Bündellöcher 11 miteinander kombiniert werden können.

Die Borstenbündel 7 werden in vorteilhafter Weise von der Beborstungsfläche 13 aus - es ist aber grundsätzlich auch von der Rückenfläche 14 aus möglich - so weit in die Bündellöcher 11 eingesteckt, daß sie um ein vorgegebenes Maß auf der Rückenfläche 14 des Bürstenkopfes 2 herausragen, wie dies in der Fig. 2 bei zwei Bürstenbündeln 7 zu erkennen ist. Jetzt werden die auf der Rückenfläche 14 des Bürstenkopfes 2 herausragenden Enden der Borstenbündel 7 in an sich bekannter Weise angeschmolzen, so daß in diesem Bereich jedes Borstenbündel 7 eine Verdickung 15 entsteht. Durch die Fase 12 an jedem Bündelloch 11 wird die Bildung der Verdickung 15 begünstigt.

Wenn alle Borstenbündel 7 an ihren befestigungsseitigen Enden mit Verdickungen 15 versehen sind, wird der gespritzte Körper 1 der Zahnbürste mit seinem Bürstenkopf 2 in eine weitere Spritzform 16 eingelegt, die in Fig. 3 gezeigt ist. Dabei verbleibt in der Form 16 im Bereich der Rückenfläche 14 des Bürstenkopfes 2 ein freier Raum 17, der jetzt mit einem geeigneten Kunststoff ausgefüllt wird. Dadurch werden alle Verdickungen 15 der Borstenbündel 7 überdeckt und der Bürstenkopf 2 erhält seine fertige Form.

In den freien Raum 17 wird ein Kunststoff eingespritzt, der mit demjenigen Kunststoff gleich bzw. identisch sein kann, aus dem auch der Bürstenkörper 1 gespritzt wurde. Es dürfte jedoch vorteilhaft sein, für das Ausspritzen des freien Raumes 17 einen anderen Kunststoff zu verwenden. Dabei ist es zunächst möglich, einen anders eingefärbten Kunststoff einzuspritzen, durch den der optische Eindruck der Zahnbürste bzw. des Bürstenkörpers 1 bestimmt wird. Bei der Verwendung beispielsweise eines gummielastischen Kunststoffes ist es möglich, die Verbindung des Bürstenkopfes 2 mit dem Bürstenhals 3 elastisch zu gestalten. Dabei muß sich jedoch der freie Raum 17 bis in den Bereich des Bürstenhalses 3 erstrecken. dies wird dadurch erreicht, daß sich der Vorsprung 8, der zur Fertigung einer Aussparung im Bürstenkopf dient, bis in den Bürstenhals 3 erstreckt.

Der den Formhohlraum 17 ausfüllende Kunststoff kann der gleiche Kunststoff sein, wie er auch für den ersten Spritzvorgang verwendet wurde. Es kann jedoch auch ein anderer, insbesondere auch ein eingefärbter Kunststoff verwendet werden. Wenn sich der Vorsprung 8, der zur Fertigung einer Aussparung im Bürstenkopf dient, bis in den Bürstenhals 3 erstreckt, erstreckt sich auch der Formhohlraum 17 in der Form 16 bis in den Bereich des Bürstenhalses 3. Dadurch ist es in einfacher Weise möglich, die Elastizität des Bürstenhalses 3 zu beeinflussen.

## Patentansprüche

1. Verfahren zur Herstellung von Bürsten, insbesondere Zahnbürsten, bei dem zunächst ein Bürstenkörper (1) aus thermoplastischem Kunststoff gespritzt wird, der im Bereich des zu bildenden Bürstenkopfes (2) eine vorgegebene Anzahl und Anordnung von durchgehenden Bürstenlöchern aufweist, dadurch gekennzeichnet, daß eine rückseitige, sich zumindest über alle Bürstenlöcher erstreckende Aussparung (17) vorgesehen ist, bei dem anschließend vorbereitete Borstenbündel (7) in alle Bündellöcher (11) eingesteckt werden und bei dem schließlich die zuvor gebildete Aussparung (17) mit weiterem Kunststoff ausgespritzt wird, wobei
der vorgefertigte und mit Bündellöchern (11) sowie mit einer rückseitigen Aussparung (17) versehene Bürstenkörper (1) von der Spritzgußform (4) einer getrennten Beborstungsstation zugeführt wird, in der die vorbereiteten Borstenbündel (7) eingesetzt und an ihren inneren Enden verschmolzenen werden, und daß der beborstete Bürstenkörper (1) anschließend in eine weitere Spritzgußform (16) zum Ausspritzen der Aussparung (17) bewegt wird.

2. Verfahren nach Anspruch 1,
dadurch gekennzeichnet,
daß die einzelnen Borstenbündel (7) in der Beborstungsstation konfiguriert werden.

3. Verfahren nach Anspruch 1 oder 2,
dadurch gekennzeichnet,
daß die nutzungsseitigen Borstenenden der einzelnen Borstenbündel (7) in die Beborstungsstation abgerundet werden.

4. Verfahren nach mindestens einem der Ansprüche 1 - 3,
dadurch gekennzeichnet,
daß die vorbereiteten Borstenbündel (7) von der Borstenfläche des Bürstenkörpers (1) aus in die Bündellöcher (11) eingesteckt werden.

5. Verfahren nach mindestens einem der Ansprüche 1 - 3,
dadurch gekennzeichnet,
daß die vorbereiteten Borstenbündel (7) von der Rückseite der Borstenfläche des Bürstenkörpers (1) aus in die Bündellöcher (11) eingesteckt werden.

6. Verfahren nach Anspruch 4,
dadurch gekennzeichnet,
daß durch Faltung gebildete Borstenbündel (7) in die Bündellöcher (11) eingesteckt werden.

7. Verfahren nach mindestens einem der Ansprüche 1 - 6,
dadurch gekennzeichnet,
daß die Borstenbündel (7) direkt in die Bündellöcher (11) eingesteckt werden.

8. Verfahren nach mindestens einem der Ansprüche 1 - 6,
dadurch gekennzeichnet,
daß die Borstenbündel (7) zunächst in eine Zwischenplatte und erst von derselben in die Bündellöcher (11) eingesteckt werden.

9. Verfahren nach mindestens einem der Ansprüche 1 - 8,
dadurch gekennzeichnet,
daß die Aussparung (17) des Bürstenkörpers (1) mit einem vom Bürstenkörper abweichenden Kunststoff ausgespritzt wird.

10. Verfahren nach mindestens einem der Ansprüche 1 - 9,
dadurch gekennzeichnet,
daß sich die Aussparung (17) ganz oder teilweise bis zum Rand des Bürstenkörpers (1) erstreckt.

11. Verfahren nach mindestens einem der Ansprüche 1 - 10,
dadurch gekennzeichnet,
daß sich die Aussparung (17) ganz oder zumindest teilweise bis in den Hals (3) bzw. Griff der Bürste erstreckt.

## Claims

1. Method for the production of brushes, especially toothbrushes, in which firstly a brush body (1) is injection moulded from thermoplastic plastic, which in the region of the brush head (2) to be formed has a preset number and arrangement of piercing brush holes, characterised in that a rearward recess (17) extending at least over all of the brush holes is provided in which subsequently prepared bundles of bristles (7) are inserted into all of the bundle holes (11) and in which finally the previously formed recess (17) is filled out by injection with further plastic, the prefabricated brush body (1) provided with bundle holes (11) as well as with a rearward recess (17) being fed from the injection mould (4) to a separate bristle-fitting station in which the prepared bundles of bristles (7) are inserted and fused at their inner ends, and that the brush body (1) fitted with bristles is subsequently moved into a further injection mould (16) for filling out the recess (17) by injection.

2. Method according to Claim 1,
characterised in that
the individual bundles of bristles (7) are configured in the bristle-fitting station.

3. Method according to Claim 1 or 2,
characterised in that
the bristle ends on the usage side of the individual bundles of bristles (7) are rounded off in the bristle-fitting station.

4. Method according to at least one of the Claims 1 - 3,
characterised in that
the prepared bundles of bristles (7) are inserted into the bundle holes (11) from the bristle area of the brush head (1).

5. Method according to at least one of the Claims 1 - 3,
characterised in that
the prepared bundles of bristles (7) are inserted into the bundle holes (11) from the rearward side of the bristle area of the brush head (1).

6. Method according to Claim 4,
characterised in that
bundles of bristles (7) formed by folding are inserted into the bundle holes (11).

7. Method according to at least one of the Claims 1 - 6,
characterised in that
the bundles of bristles (7) are inserted directly into the bundle holes (11).

8. Method according to at least one of the Claims 1 - 6,
characterised in that
the bundles of bristles (7) are inserted into an intermediate plate and only from the same into the bundle holes (11).

9. Method according to at least one of the Claims 1 - 8,
characterised in that
the recess (17) of the brush body (1) is filled out by injection with a plastic different from the brush body.

10. Method according to at least one of the Claims 1 - 9,
characterised in that
the recess (17) extends wholly or in part up to the edge of the brush body (1).

11. Method according to at least one of the Claims 1 - 10,
characterised in that
the recess (17) extends wholly or at least in part into the neck (3) or handle of the brush.

## Revendications

1. Procédé de fabrication de brosses, en particulier des brosses à dents, par lequel, tout d'abord, on moule par injection dans un matériau synthétique thermoplastique un corps de brosse (1), qui est muni d'un nombre déterminé de trous traversants disposés dans un ordre déterminé dans la zone de la tête de la brosse (2), qui sera formée ultérieurement,
caractérisé en ce qu'il est prévu de former un évidement arrière (17), qui s'étend au moins au-dessus de tous les trous de la brosse, procédé par lequel, ensuite, des groupes de poils (7) apprêtés sont insérés dans tous les trous traversants (11) et par lequel, enfin, l'évidement (17), précédemment formé, reçoit par injection-moulage un autre matériau synthétique, le corps de brosse (1), préfabriqué et muni de trous traversants (11), ainsi que d'un évidement arrière (17), étant acheminé depuis le moule pour injection (4) vers un poste séparé de montage des poils, dans lequel on procède à l'insertion des groupes de poils (7) apprêtés, qui sont réunis par fusion à leurs extrémités intérieures, et en ce que le corps de la brosse (1) muni de poils est ensuite amené dans un autre moule pour injection (16) pour l' injection-moulage dans l'évidement (17).

2. Procédé selon la revendication 1, caractérisé en ce que chaque groupe de poils (7) est configuré dans le poste de montage des poils.

3. Procédé selon la revendication 1 ou 2, caractérisé en ce que la forme arrondie des extrémités de brossage des poils de chaque groupe de poils (7) est réalisée dans le poste de montage des poils.

4. Procédé selon l'une quelconque des revendications 1 à 3, caractérisé en ce que les groupes de poils (7) apprêtés sont insérés dans les trous traversants (11) à partir de la face, à munir de poils, du corps de la brosse (1).

5. Procédé selon l'une quelconque des revendications 1 à 3, caractérisé en ce que les groupes de poils (7) apprêtés sont insérés dans les trous traversants (11) à partir de l'arrière de la face, à munir de poils, du corps de la brosse (1).

6. Procédé selon la revendication 4, caractérisé en ce que les groupes de poils (7), formés par pliage, sont insérés dans les trous traversants (11).

7. Procédé selon l'une quelconque des revendications 1 à 6, caractérisé en ce que les groupes de poils (7) sont directement insérés dans les trous traversants (11).

8. Procédé selon l'une quelconque des revendications 1 à 6, caractérisé en ce que les groupes de poils (7) sont d'abord insérés dans une plaque intermédiaire, à partir de laquelle ils sont ensuite insérés dans les trous traversants (11).

9. Procédé selon l'une quelconque des revendications 1 à 8, caractérisé en ce que l'évidement (17) du corps de la brosse (1) reçoit par injection-moulage un matériau synthétique différent de celui du corps de la brosse (1).

10. Procédé selon l'une quelconque des revendications 1 à 9, caractérisé en ce que l'évidement (17) s'étend totalement ou partiellement jusqu'au bord du corps de la brosse (1).

11. Procédé selon l'une quelconque des revendications 1 à 10, caractérisé en ce que l'évidement (17) s'étend totalement ou au moins partiellement jusqu'au col (3) ou le manche de la brosse.
